**Europäisches Patentamt**

**European Patent Office**

**Office européen des brevets**

(19)

(11) Numéro de publication : **0 351 266 B1**

(12)

# FASCICULE DE BREVET EUROPEEN

(45) Date de publication du fascicule du brevet :
**09.09.92 Bulletin 92/37**

(51) Int. Cl.$^5$ : **C08F 4/655,** C08F 10/00

(21) Numéro de dépôt : **89401780.5**

(22) Date de dépôt : **23.06.89**

(54) **Procédé de préparation d'un catalyseur pour la polymérisation des oléfines.**

(30) Priorité : **23.06.88 FR 8808448**

(43) Date de publication de la demande :
**17.01.90 Bulletin 90/03**

(45) Mention de la délivrance du brevet :
**09.09.92 Bulletin 92/37**

(84) Etats contractants désignés :
**AT BE CH DE ES FR GB GR IT LI LU NL SE**

(56) Documents cités :
**DE-A- 3 040 044
FR-A- 2 128 771
GB-A- 1 182 651
CHEMICAL ABSTRACTS, vol. 89, no. 20,
November 1978, page 18, résumé no. 164194e,
Columbus, Ohio, US**

(73) Titulaire : **ECP-ENICHEM POLYMERES
FRANCE S.A.
11 rue de l'Abreuvoir
F-92411 Courbevoie (FR)**

(72) Inventeur : **Bujadoux, Karel
31 Avenue Van Pelt
F-62300 Lens (FR)**
Inventeur : **Brusson, Jean-Michel
409 Rue Jean Moulin
F-59130 Lambersart (FR)**
Inventeur : **Petit, Francis
27 Allée de la Clairière
F-59650 Villeneuve d'Ascq (FR)**
Inventeur : **Mortreux, André
17 Rue Gambetta
F-59510 Hem (FR)**

Jouve, 18, rue Saint-Denis, 75001 PARIS

## Description

La présente invention concerne un procédé pour la préparation d'un catalyseur de type Ziegler pour la polymérisation des oléfines, le catalyseur ainsi obtenu et un procédé de polymérisation des oléfines le mettant en oeuvre.

Le document JP-A-53/81 492 (1978) décrit un catalyseur solide pour la polymérisation des alpha-oléfines comprenant un solide contenant du titane préparé par un processus comprenant la liquéfaction d'un halogénure de magnésium anhydre dans un hydrocarbure halogéné en présence d'halogénure d'aluminium, la mise en présence de la solution obtenue avec un initiateur pour précipiter une masse solide qui est ensuite, ou simultanément à sa formation, mise en contact avec un composé halogéné de titane. l'halogénure d'aluminium peut être obtenu par réaction d'un halogénoalkylaluminium avec le solvant chloré. L'initiateur peut être un composé halogéné de titane, un donneur d'électrons ou un complexe de ces produits. Tous les exemples fournis dans ce document comprennent l'utilisation d'un donneur d'électrons et, par ailleurs, les données publiées montrent que le composé halogéné de titane reste à la valence (IV). Enfin, la température d'utilisation des catalyseurs décrits dans ce document en polymérisation est inférieure ou égale à 120°C.

Le document US-A-4 366 297 enseigne un procédé de préparation de copolymères caoutchouteux d'oléfines. Le catalyseur utilisé comprend un composé de titane à l'état liquide obtenu en traitant un tétrahalogénure de titane dans un hydrocarbure et/ou un hydrocarbure halogéné, en présence d'un éther, au moyen d'un composé qui peut être un composé organoaluminique ou un composé organomagnésien, utilisé selon les exemples donnés en une quantité stoechiométrique par rapport au composé de titane. La température d'utilisation des catalyseurs décrits dans ce document, en copolymérisation pour obtenir des copolymères amorphes, est inférieure ou égale à 120°C.

Le demandeur a constaté que les catalyseurs des documents précédemment cités ne sont pas stables à haute température.

Le problème posé par la présente invention est, dans le cadre de catalyseurs Ziegler en suspension dans un dihalogénoalcane d'obtenir un catalyseur stable et ayant de bonnes performances, c'est-à-dire conduisant à des rendements élevés en polymère, notamment à température élevée (c'est-à-dire supérieure à 150°C), et permettant d'obtenir des copolymères, particulièrement d'éthylène, possédant une structure au moins partiellement cristalline, et non totalement amorphe. On a maintenant trouvé qu'il est possible d'obtenir ce type de catalyseur par réduction limitée d'un composé de titane (IV) en composé de titane (III) sans formation importante de composé de titane (II), tout en utilisant un excès de réducteur par rapport au titane.

Un objet de la présente invention consiste en un procédé de préparation d'un catalyseur pour la polymérisation des oléfines comprenant, dans une première étape, la réduction d'un composé de titane (IV) dans un $\alpha,\omega$-dihalogénoalcane au moyen d'un excès molaire d'au moins un composé organoaluminique halogéné, en l'absence d'un éther, caractérisé en ce qu'il comprend, dans une deuxième étape, l'ajout au mélange réactionnel d'un composé susceptible de former un halogénure de magnésium in situ, sans réduction supplémentaire du composé de titane obtenu lors de la première étape.

Le composé de titane (IV) à réduire a avantageusement pour formule générale $Ti(OR)_nX_{4-n}$ dans laquelle X est un halogène, R est un radical alkyle ayant de 1 à 10 atomes de carbone et $0 \leq n \leq 4$. On utilise préférentiellement le tétrachlorure de titane $TiCl_4$.

Un composé de vanadium (III), (IV) ou (V) peut être ajouté au composé de titane (IV) avant, pendant ou après réduction. Sa formule générale est $VX_3$, $VX_4$ ou $VO(OR)_mX_{3-m}$ dans lesquelles X est un halogène, de préférence le chlore, R est un radical alkyle ayant de 1 à 6 atomes de carbone et $0 \leq m \leq 3$. Avantageusement, le composé de vanadium pentavalent contient au moins un atome de chlore. On utilise par exemple l'oxytrichlorure $VOCl_3$ pour un ajout avant réduction, $VCl_3$ pour un ajout après réduction du composé de titane (IV).

L' $\alpha,\omega$-dihalogénoalcane utilisé comme milieu de suspension du catalyseur selon l'invention a pour formule générale $X-(CH_2)_n-X'$ dans laquelle X et X', identiques ou différents, sont chacun un atome d'halogène, tels le chlore, le brome et le fluor et n est un nombre entier compris entre 1 et 10, de préférence entre 1 et 6. La nature des atomes d'halogène et la valeur de n sont telles que l'$\alpha,\omega$-dihalogénoalcane soit liquide dans les conditions normales de température et de pression. Parmi les composés répondant à la formule générale précédente, on choisit avantageusement le dichlorométhane, le 1,2-dichloroéthane, le 1,4-dichlorobutane et leurs mélanges.

Le composé organo-aluminique halogéné utilisé pour réduire le composé de titane (IV) est choisi parmi :
– les composés de formule générale $R_nAlX_{3-n}$ dans laquelle R est un radical alkyle ayant de 1 à 4 atomes de carbone, X est un halogène et $1 \leq n \leq 2$. On citera par exemple le dichloroéthylaluminium, le chlorodiéthylaluminium et leurs mélanges.
– les composés de formule générale $X_2Al(CH_2)_nAlX_2$ dans laquelle X est un atome d'halogène et $1 \leq n \leq 8$. Ils peuvent être obtenus par réaction de l'aluminium sur un $\alpha,\omega$-dihalogénoalcane. On citera par exemple les composés de formule $Cl_2AlCH_2AlCl_2$ et $Cl_2Al(CH_2)_2AlCl_2$.

Le procédé selon l'invention peut être mis en oeuvre en présence, en outre, d'un solvant inerte avantageusement choisi parmi les hydrocarbures aliphatiques ou cycloaliphatiques saturés dont la température d'ébullition sous pression atmosphérique n'est pas inférieure à 60°C. Il peut s'agir notamment d'un hydrocarbure aliphatique ou cycloaliphatique saturé ayant de 6 à 14 atomes de carbone, par exemple une coupe d'hydrocarbures aliphatiques saturés en $C_{10}$-$C_{12}$. La quantité de solvant inerte est choisie de telle sorte que le catalyseur obtenu soit sous forme de suspension manipulable.

Le procédé selon l'invention peut également être mis en oeuvre en présence d'au moins une $\alpha$-oléfine ayant au moins 4 atomes de carbone, afin de favoriser l'activité des centres actifs du catalyseur. Comme $\alpha$-oléfine on peut utiliser avantageusement le méthyl-4-pentène-1, l'hexène-1, l'octène-1, le décène-1, en une quantité pouvant aller jusqu'à 10 fois la quantité molaire de composé de titane (IV).

Comme composé susceptible de former in-situ un halogénure de magnésium, on peut citer notamment un dérivé organomagnésien de formule R-Mg-R' dans laquelle R et R', identiques ou différents, sont des radicaux alkyle ayant de 1 à 12 atomes de carbone . Avantageusement, on utilise le n-butyléthylmagnésium ou le n-butyl-n-octylmagnésium ou leurs mélanges.

Le procédé selon l'invention peut être mis en oeuvre dans un réacteur agité à une température comprise entre 0 et 80°C. Les précautions habituelles sont prises pour éviter les pertes de produits volatils en opérant sous une pression adéquate. La présence d'un $\alpha,\omega$-dihalogénoalcane dans le milieu réactionnel a pour effet de favoriser la réduction du composé de titane (IV) essentiellement jusqu'à un composé de titane (III), alors que si l'$\alpha,\omega$-dihalogénoalcane est absent, la formation de composé de titane (II) est très importante.

Les proportions relatives des différents réactifs mis en oeuvre dans le procédé selon l'invention sont les suivantes, exprimées en rapports molaires :

– $\alpha,\omega$-dihalogénoalcane/composé de titane, et le cas échéant de vanadium : avantageusement compris entre 5 et 180, de préférence entre 8 et 60 ;

– composé organoaluminique halogéné/composé de titane, et le cas échéant de vanadium : supérieur à 1 ; il est de préférence inférieur ou égal à 6 ;

– composé susceptible de former un halogénure de magnésium in-situ/composé de titane, et le cas échéant de vanadium : avantageusement compris entre 1 et 15, de préférence compris entre 1 et 6 ;

– composé de vanadium/composé de titane : avantageusement inférieur ou égal à 6, de préférence inférieur ou égal à 3, encore préférentiellement compris entre 0 et 1 ;

– composé organoaluminique halogéné/composé susceptible de former un halogénure de magnésium in-situ : avantageusement compris entre 0,3 et 2, de préférence entre 0,5 et 1,5.

Le catalyseur ainsi obtenu comprend donc au moins un composé de titane, au moins un composé organo-aluminique halogéné et au moins un composé inorganique de magnésium en suspension dans au moins un $\alpha,\omega$-dihalogénoalcane ; il est caractérisé en ce que le composé de titane est essentiellement un composé de titane (III), la teneur globale en titane (II) et en titane (IV) étant inférieure ou égale à 15% de la teneur totale en titane.

Le catalyseur peut en outre comprendre tout ou partie du solvant inerte utilisé lors de sa préparation (il peut être souhaitable d'évaporer partiellement le solvant pour ajuster les concentrations en solide).

Le catalyseur peut en outre comprendre l'$\alpha$-oléfine utilisée pendant sa préparation, le cas échéant à l'état au moins partiellement polymérisé.

La détermination des états de valence du titane est faite au moyen d'un dosage rédox en 3 parties. La première partie permet de calculer la teneur en ($Ti^{2+}$ + $Ti^{3+}$) ; elle consiste à oxyder $Ti^{2+}$ en $Ti^{3+}$ au moyen de protons apportés sous la forme d'une solution d'HCl 2N préparée dans de l'eau distillée dégazée. Le $Ti^{3+}$ formé plus le $Ti^{3+}$ présent à l'origine sont alors oxydés en $Ti^{4+}$ au moyen d'un excès de solution de $Fe^{3+}$ 0,2N. $Fe^{3+}$ est réduit en $Fe^{2+}$ qui est dosé par le bichromate de potassium en milieu sulfurique-phosphorique en présence de diphénylamine sulfonate de sodium à 0,2%. La quantité de $Fe^{2+}$ ainsi dosée correspond aux ions $Ti^{2+}$ + $Ti^{3+}$ présents à l'origine dans le catalyseur. La deuxième partie permet de calculer la teneur en $2Ti^{2+}$ + $Ti^{3+}$. Elle consiste à oxyder $Ti^{2+}$ et $Ti^{3+}$ au moyen d'un excès d'une solution d'ions $Fe^{3+}$, en absence de protons pour éviter l'oxydation de $Ti^{2+}$ en $Ti^{3+}$, selon les réactions :

$$Ti^{2+} + 2\,Fe^{3+} \rightarrow Ti^{4+} + 2Fe^{2+}$$

et

$$Ti^{3+} + Fe^{3+} \rightarrow Ti^{4+} + Fe^{2+}$$

Le dosage de l'ion $Fe^{2+}$ est alors effectué au moyen de bichromate de potassium comme ci-dessus. La valeur obtenue correspond à la somme $2Ti^{2+}$ + $Ti^{3+}$ présente dans le catalyseur. La troisième partie permet de déterminer la teneur en $Ti^{4+}$ par réduction, au moyen de triéthylaluminium selon un rapport atomique Al/Ti égal à 6, du titane (IV) présent en titane (III) et titane (II). Le dosage est alors effectué selon la première partie ci-dessus, la valeur trouvée pour $Ti^{2+}$ + $Ti^{3+}$ correspondant à la somme $Ti^{2+}$ + $Ti^{3+}$ + $Ti^{4+}$ des ions présents dans le composant catalytique analysé et par conséquent à la teneur totale en titane. Les différents pourcentages sont calculés en résolvant le système d'équations suivant :

$$Ti^{2+} + Ti^{3+} = A$$
$$2Ti^{2+} + Ti^{3+} = B$$
$$Ti^{2+} + Ti^{3+} + Ti^{4+} = C$$

Parmi les composés de titane pouvant être présents dans le catalyseur selon l'invention, on peut citer notamment les trihalogénures $TiX_3$, avantageusement le trichlorure $TiCl_3$.

Le catalyseur selon l'invention peut en outre comprendre au moins un composé de vanadium sous la forme soit du trihalogénure $VX_3$, par exemple le trichlorure $VCl_3$, du tétrahalogénure $VX_4$, par exemple du tétrachlorure $VCl_4$, de l'oxy-tri-halogénure $VOX_3$, par exemple l'oxytrichlorure $VOCl_3$, d,(halogéno)ester de vanadyle de formule $VO(OR)_nX_{3-n}$ dans laquelle X est un halogène, de préférence le chlore, R est un radical alkyle ayant de 1 à 6 atomes de carbone et n est compris entre 1 et 3. De préférence, le vanadium est présent à l'état de valence (III) et/ou (IV).

Le composé de magnésium contenu à l'état de suspension dans le catalyseur selon l'invention est avantageusement un halogénure de magnésium, de préférence anhydre, par exemple le chlorure de magnésium anhydre.

Le catalyseur préparé selon le procédé de l'invention peut être mis en contact avec, et peut donc en outre comprendre, un activateur organo-métallique des groupes I à III de la Classification Périodique, généralement à température ambiante sous agitation.

La nature et la quantité de l'activateur sont choisies en fonction des performances souhaitées (activateur plus ou moins réducteur, catalyseur possédant une grande activité initiale ou bien conduisant à un polymère d'indice de fluidité spécifique, etc.). La quantité d'activateur est néanmoins généralement comprise entre 1 et 100 fois la quantité molaire de composé de métal de transition.

L'activateur est avantageusement choisi parmi les trialkylaluminiums $AlR_3$, les tétralkylaluminoxanes $RR'Al-O-AlR''R'''$, les monoalkylsilanolatodialkylaluminiums $RSiH_2-O-AlR'R''$ et leurs mélanges, les radicaux alkyles R, R', R'', R''', identiques ou différents, ayant de 1 à 12 atomes de carbone. On citera par exemple le triéthyl aluminium, le tri-n-butylaluminium, le tri-n-octylaluminium, le tétraisobutylaluminoxane, le méthylsilanolatodiisobutylaluminium.

Un autre objet de la présente invention concerne un procédé de polymérisation des oléfines à une température comprise entre 20° et 350°C environ en présence d'un catalyseur tel que décrit ci-dessus. Par polymérisation, on entend l'homopolymérisation, en particulier de l'éthylène aussi bien que la copolymérisation, notamment de l'éthylène et d'au moins une $\alpha$-oléfine possédant de 3 à 8 atomes de carbone.

Le procédé de polymérisation peut être mis en oeuvre à une température comprise entre 20° et 250°C, de préférence entre 150° et 250°C, sous une pression allant jusqu'à 200 bars environ, en solution ou en suspension dans un hydrocarbure inerte ayant au moins 6 atomes de carbone tel qu'une coupe d'hydrocarbures aliphatiques saturés en $C_{10}$-$C_{12}$. Dans ce cas la concentration en composé de titane dans le catalyseur utilisé est de préférence comprise entre 0,1 et 0,4 mole par litre.

Dans le cas de la polymérisation de l'éthylène, il peut aussi être mis en oeuvre, de façon continue, dans un réacteur dans lequel le temps de séjour moyen du catalyseur est compris entre 1 et 150 secondes environ, la polymérisation étant effectuée à une température comprise entre 160 et 350°C environ, sous une pression comprise entre 400 et 3000 bars environ.

De façon à moduler le poids moléculaire du polymère obtenu et son indice de fluidité, on peut opérer en présence de jusqu'à 2% en moles d'un agent de transfert de chaîne tel que l'hydrogène. Le procédé de polymérisation selon l'invention permet l'obtention de toute une gamme de polymères de l'éthylène de densité comprise entre 0,87 et 0,97. La copolymérisation d'un flux gazeux contenant de 10 à 75% en poids de propylène et de 90 à 25% en poids d'éthylène conduit à un copolymère ayant une densité comprise, respectivement, entre 0,95 et 0,88. La copolymérisation d'un flux gazeux d'éthylène (95 à 40% en poids) et de butène-1 (5 à 60% en poids) permet d'obtenir des copolymères ayant une densité respectivement comprise entre 0,95 et 0,915. Un flux gazeux contenant de 30 à 70% en poids d'éthylène et de 70 à 30% en poids d'hexène-1 permet d'obtenir un copolymère de densité comprise respectivement entre 0,89 et 0,93. Un terpolymère de densité 0,88 à 0,915 peut être obtenu en terpolymérisant un flux gazeux contenant respectivement de 25% à 45% en poids d'éthylène, et de 75% à 55% en poids d'un mélange de propylène et de butène-1.

Les catalyseurs selon l'invention montrent une grande activité catalytique lors de la polymérisation de l'éthylène. En variant la nature de l'activateur, il est possible d'obtenir des systèmes catalytiques ayant une grande constante initiale de polymérisation et/ou pouvant conduire à des polymères ayant un indice de fluidité compris entre 0,2 et 20 dg/min. On note la possibilité d'obtenir des polymères à indice de fluidité relativement bas (par exemple inférieur à 1 dg/min.) donc plus particulièrement destinés à la fabrication de films.

Les exemples ci-après ont pour but d'illustrer l'invention de façon non limitative.

Exemples 1 à 10 - Préparation des catalyseurs

Les catalyseurs ont été préparés dans un ballon en verre muni d'un agitateur et surmonté d'un réfrigérant, sous atmosphère d'azote. Les différents réactifs sont introduits à une vitesse telle que le milieu réactionnel soit maintenu à une température comprise entre 15 et 60 °C. La préparation dure environ une heure.

On introduit successivement dans le ballon, sous agitation et à température ambiante, selon les rapports molaires ou atomiques figurant au Tableau I, du 1,2-dichloroéthane (ci-après DCE), le cas échéant l'hexène-1, (ci-après Hx), puis 10 millimoles de $TiCl_4$ (dilué à 1 mole/litre dans une coupe d'hydrocarbures aliphatiques saturés en $C_{10}$-$C_{12}$ utilisé comme solvant inerte), et enfin du dichloroéthylaluminium (ci-après DCEA).

On maintient sous agitation pendant 30 à 45 minutes et on ajoute 100 ml du même solvant inerte puis le n-butyléthylmagnésium (BEM) goutte à goutte. La température s'élève d'environ 40°C. On laisse refroidir à l'ambiante et on ajoute le cas échéant de l'oxytrichlorure de vanadium. On complète avec le solvant inerte de façon à obtenir le catalyseur en suspension à une concentration de 50 millimoles/litre de titane et vanadium.

## Tableau I

| Exemple | $\dfrac{DCE}{Ti+V}$ | $\dfrac{HX}{Ti+V}$ | $\dfrac{Al}{Ti+V}$ | $\dfrac{Mg}{Ti+V}$ | $\dfrac{V}{Ti}$ |
|---|---|---|---|---|---|
| 1 | 20 | 0 | 3 | 3 | 1 |
| 2 | 20 | 2,5 | 6 | 6 | 1 |
| 3 | 20 | 3,8 | 3 | 3 | 1 |
| 4 | 40 | 7,5 | 6 | 6 | 0 |
| 5 | 8 | 1,5 | 1,2 | 1,2 | 4 |
| 6 | 20 | 3,8 | 3 | 1,5 | 1 |
| 7 | 20 | 3,8 | 1,5 | 1,5 | 1 |
| 8 | 20 | 3,8 | 1,5 | 4 | 1 |
| 9 | 10 | 3,8 | 3 | 3 | 1 |
| 10 | 10 | 3,8 | 1,5 | 1,5 | 1 |

Exemple 3bis (comparatif)

Le mode opératoire de l'exemple 3 a été répété en remplaçant le DCEA par le tri(n-octyl)aluminium.

Exemple 11

Dans les conditions expérimentales de l'exemple 3, on introduit l'oxytrichlorure de vanadium simultanément au tétrachlorure de titane, avant l'introduction du DCEA.

Exemple 12

Dans les conditions expérimentales de l'exemple 5, on introduit l'oxytrichlorure de vanadium simultanément au tétrachlorure de titane, avant l'introduction du DCEA.

Exemple 13

Dans les conditions expérimentales de l'exemple 3, on remplace le 1,2-dichloroéthane par le dichlorométhane.

Exemple 14

Le mode opératoire de l'exemple 3 a été répété en remplaçant mole à mole le BEM par le BOM.

Exemple 15

Le mode opératoire de l'exemple 3 a été répété en remplaçant mole à mole $TiCl_4$ par le titanate de n-butyle.

Exemples 16 et 17

Le mode opératoire de l'exemple 3 a été répété en remplaçant mole à mole $VOCl_3$ par $VCl_4$ (exemple 16) ou par le triisobutylate de vanadyle (exemple 17).

Exemple 18 (comparatif)

Le mode opératoire de l'exemple 4 a été répété en n'utilisant pas de 1,2-dichloroéthane (c'est-à-dire DCE/Ti = 0). Le catalyseur obtenu a une teneur en titane (II) égale à 57% de la teneur totale en titane, alors qu'elle n'est que de 6,5% pour le catalyseur selon l'exemple 4.

Exemple 19 (comparatif)

Le mode opératoire de l'exemple 6 a été répété en n'ajoutant pas de dichloroéthylaluminium au milieu réactionnel (c'est-à-dire Al/Ti+V = 0).

Exemples 20 à 38 - Polymérisation de l'éthylène à 200°C sous 6 bars.

L'installation comprend un réacteur autoclave agité de 1 litre, thermostaté et muni de vannes d'admission du catalyseur et de soutirage du polyéthylène formé. La polymérisation est réalisée de façon discontinue en introduisant d'abord le catalyseur et l'activateur puis en pressurisant l'autoclave au moyen d'éthylène jusqu'à une pression de 6 bars. On maintient cette pression par apport d'éthylène frais dont on mesure le débit. Après un temps de réaction donné on pèse la quantité Q formée de polyéthylène exprimée en grammes par milliatome-gramme de métal de transition par minute et par mole.l⁻¹ d'éthylène dans le tableau II ci-après.

Dans tous ces exemples, l'activateur est un mélange de triéthylaluminium, (25% molaire) et de méthylsilanolatodiisobutylaluminium (75% molaire) selon un rapport atomique Al/Ti+V égal à 15.

## TABLEAU II

| Exemple | 20 | 21 | 22 | 22bis | 23 | 24 | 25 |
|---|---|---|---|---|---|---|---|
| Catalyseur de l'exemple n° | 1 | 2 | 3 | 3bis | 4 | 5 | 6 |
| Q | 1120 | 1355 | 1410 | 770 | 1180 | 805 | 1160 |

| Exemple | 26 | 27 | 28 | 29 | 30 | 31 | 32 |
|---|---|---|---|---|---|---|---|
| Catalyseur de l'exemple n° | 7 | 8 | 9 | 10 | 11 | 12 | 13 |
| Q | 1290 | 1410 | 1465 | 1180 | 1700 | 950 | 1150 |

| Exemple | 33 | 34 | 35 | 36 | 37 | 38 |
|---|---|---|---|---|---|---|
| Catalyseur de l'exemple n° | 14 | 15 | 16 | 17 | 18 | 19 |
| Q | 1520 | 1300 | 1580 | 1175 | 405 | 570 |

Les exemples 22bis, 37 et 38 sont comparatifs.

EXEMPLE 39

On a utilisé le catalyseur de l'exemple 4 et, en tant qu'activateur, le méthylsilanolatodiisobutylaluminium seul selon un rapport Al/Ti égal à 20. Dans les conditions de polymérisation des exemples 20 à 38, on a obtenu 1700 g de polyéthylène par milliatomegramme de titane, par minute et par mole.$l^{-1}$ d'éthylène.

EXEMPLE 40

Le mode opératoire de l'exemple 4 à été répété en utilisant le titanate de n-butyle ($Ti(O-nBu)_4$) à la place de $TiCl_4$. Dans les conditions de polymérisation des exemples 20 à 38, en utilisant comme activateur le méthylsilanolatodiisobutylaluminium seul selon un rapport atomique Al/Ti égal à 20, on a obtenu 1600g de polyéthylène par milliatomegramme de titane, par minute et par mole.$l^{-1}$ d'éthylène.

EXEMPLE 41 - Copolymérisation éthylène/butène-1 à 200°C sous 800 bars

Dans une installation fonctionnant en continu et comprenant un réacteur alimenté en monomères au moyen de compresseurs et en système catalytique au moyen d'une pompe à haute pression, un séparateur dans lequel le mélange réactionnel provenant du réacteur est admis après détente à 250 bars, une trémie dans laquelle le copolymère se trouvant dans le fond du séparateur est admis après détente à une valeur de 10 bars environ, on réalise la copolymérisation d'un mélange de 40% d'éthylène, 35% de propylène et 25% de butène-1 (% en moles).

Le système catalytique comprend le catalyseur de l'exemple 3 et l'activateur triéthylaluminium (25% molaire)-méthylsilanolatodiisobutylaluminium (75% molaire), le rapport atomique Al (de l'activateur) à la somme Ti+V (du catalyseur) étant égal à 20.

On recueille 13,8 kg de copolymère par millimole de titane et vanadium, ayant une densité de 0,884, un indice de fluidité (mesuré selon la norme ASTM D 1238-condition E) égal à 7,3 dg/min et un taux de cristallinité (mesuré par diffraction des rayons X) égal à 14%.

EXEMPLE 42

Dans les conditions de l'exemple 41, on réalise la même copolymérisation en utilisant le catalyseur de l'exemple 5 et le même activateur.

On recueille 3,74 kg de copolymère par millimole de titane et vanadium ayant une densité de 0,890, un indice de fluidité, mesuré dans les mêmes conditions, remarquablement peu élévé, égal à 0,8 dg/min, et un taux de cristallinité (mesuré par diffraction des rayons X) égal à 17%.

**Revendications**

1 - Procédé de préparation d'un catalyseur pour la polymérisation des oléfines comprenant, dans une première étape, la réduction d'un composé de titane (IV) dans un $\alpha,\omega$-dihalogénoalcane au moyen d'un excès molaire d'au moins un composé organoaluminique halogéné, en l'absence d'un éther, caractérisé en ce qu'il comprend, dans une deuxième étape, l'ajout au mélange réactionnel d'un composé susceptible de former un halogénure de magnésium in-situ, sans réduction supplémentaire du composé de titane obtenu lors de la première étape.

2 - Procédé selon la revendication 1, caractérisé en ce que le composé susceptible de former in-situ un

7

halogénure de magnésium est choisi parmi les dérivés organomagnésiens de formule R-Mg-R′ dans laquelle R et R′, identiques ou différents, sont des radicaux alkyles ayant de 1 à 12 atomes de carbones.

3 - Procédé selon l'une des revendications 1 et 2, caractérisé en ce qu'il comprend l'ajout au milieu réactionnel, avant, pendant ou après réduction du composé de titane (IV), d'au moins un composé de vanadium choisi parmi les composés de formule $VX_3$, $VX_4$ et $VO(OR)_mX_{3-m}$ dans lesquelles X est un halogène, R est un radical alkyle ayant de 1 à 6 atomes de carbone et $0 \leqq m \leqq 3$.

4 - Procédé selon la revendication 3, caractérisé en ce que le composé de vanadium est l'oxytrichlorure $VOCl_3$ et en ce qu'il est ajouté au milieu réactionnel simultanément au composé de titane (IV), avant introduction du composé organo-aluminique halogéné.

5 - Procédé selon l'une des revendications 1 à 4, caractérisé en ce que le rapport molaire de l'$\alpha,\omega$-dihalogénoalcane au composé de titane, et le cas échéant de vanadium, est compris entre 5 et 180, le rapport molaire du composé organoaluminique halogéné au composé de titane, et le cas échéant de vanadium, est supérieur à 1, le rapport molaire du composé susceptible de former un halogénure de magnésium in-situ au composé de titane, et le cas échéant de vanadium, est compris entre 1 et 15, le rapport molaire du composé de vanadium au composé de titane est inférieur ou égal à 6 et le rapport molaire du composé organoaluminique halogéné au composé susceptible de former un halogénure de magnésium in-situ est compris entre 0,3 et 2.

6 - Catalyseur de polymérisation des oléfines comprenant au moins un composé de titane, au moins un composé organo-aluminique halogéné et au moins un composé inorganique de magnésium en suspension dans au moins un $\alpha,\omega$-dihalogénoalcane, caractérisé en ce que le composé de titane est essentiellement un composé de titane (III), la teneur globale en titane (II) et en titane (IV) étant inférieure ou égale à 15% de la teneur totale en titane, et en ce qu'il est susceptible d'être obtenu par le procédé de l'une des revendications 1 à 5.

7 - Catalyseur selon la revendication 6, caractérisé en ce qu'il comprend en outre au moins un composé de vanadium, le rapport atomique V/Ti étant inférieur ou égal à 6.

8 - Catalyseur selon l'une des revendications 6 et 7, caractérisé en ce que, en outre, il comprend au moins un activateur organo-métallique des groupes I à III de la Classification Périodique.

9 - Procédé de polymérisation des oléfines, à une température comprise entre 20° et 350°C, caractérisé en ce que la polymérisation est effectuée en présence d'un catalyseur conforme à l'une des revendications 6 à 8, soit à une température comprise entre 20 et 250°C, sous une pression allant jusqu'à 200 bars, en solution ou en suspension dans un hydrocarbure liquide inerte ayant au moins 6 atomes de carbone, soit à une température comprise entre 160 et 350°C, sous une pression comprise entre 400 et 3000 bars, de façon continue dans un réacteur dans lequel le temps de séjour moyen du catalyseur est compris entre 1 à 150 secondes.

10 - Procédé selon la revendication 9, caractérisé en ce qu'il consiste à copolymériser l'éthylène avec au moins une $\alpha$-oléfine comprenant de 3 à 8 atomes de carbone dans des proportions telles qu'un flux gazeux contenant de 10% à 75% en poids de propylène et de 90% à 25% en poids d'éthylène conduit à un copolymère de densité comprise, respectivement, entre 0,95 et 0,88, un flux gazeux contenant de 95% à 40% en poids d'éthylène et de 5 à 60% en poids de butène-1 conduit à un copolymère ayant une densité comprise, respectivement, entre 0,95 et 0,915, un flux gazeux contenant de 30% à 70% en poids d'éthylène et de 70% à 30% en poids d'hexène-1 conduit à un copolymère ayant une densité comprise, respectivement, entre 0,89 et 0,93, un flux gazeux contenant de 25 à 45% en poids d'éthylène et de 75% à 55% en poids d'un mélange de propylène et de butène-1 conduit à un terpolymère ayant une densité comprise, respectivement, entre 0,88 et 0,915.

## Patentansprüche

1. Verfahren zur Herstellung eines Katalysators für die Polymerisation von Olefinen, umfassend, in einer ersten Stufe, die Reduktion einer Titan (IV)-verbindung in einem $\alpha,\omega$-Dihalogenalkan mittels eines molaren Überschusses von mindestens einer halogenierten Organoaluminium-Verbindung, in Abwesenheit eines Ethers, dadurch gekennzeichnet, daß es in einer zweiten Stufe die Zugabe einer Verbindung zur Reaktionsmischung umfaßt, welche geeignet ist, ein Magnesiumhalogenid in situ ohne zusätzliche Reduktion der in der ersten Stufe erhaltenen Titanverbindung zu bilden.

2. Verfahren gemäß Anspruch 1, dadurch gekennzeichnet, daß die zur in situ-Bildung eines Magnesiumhalogenids geeignete Verbindung aus der Gruppe der Organomagnesiumverbindungen der Formel R-Mg-R′ ausgewählt ist, wobei R und R′, identisch oder verschieden, Alkylreste mit 1 bis 12 Kohlenstoffatomen sind.

3. Verfahren gemäß einem der Ansprüche 1 und 2, dadurch gekennzeichnet, daß vor, während oder nach der Reduktion der Titan (IV)-verbindung die Zugabe zumindest einer Vanadiumverbindung zum Reaktionsmedium vorgesehen ist, die aus den Verbindungen der Formel $VX_3$, $VX_4$ und $VO(OR)_mX_{3-m}$ ausgewählt ist, wobei X ein Halogen ist, R ein Alkylrest mit 1 bis 6 Kohlenstoffatomen und $0 \leqq m \leqq 3$ ist.

4. Verfahren gemäß Anspruch 3, dadurch gekennzeichnet, daß die Vanadiumverbindung das Oxytrichlorid $VOCl_3$ ist und daß es dem Reaktionsmedium gleichzeitig mit der Titan (IV)-verbindung vor Einbringung der halogenierten Organoaluminiumverbindung, zugesetzt wird.

5. Verfahren gemäß einem der Ansprüche 1 bis 4, dadurch gekennzeichnet, daß das Molverhältnis des $\alpha,\omega$-Dihalogenalkans zur Titanverbindung und gegebenenfalls zur Vanadiumverbindung zwischen 5 und 180 liegt, das Molverhältnis der halogenierten Organoaluminiumverbindung zur Titanverbindung und gegebenenfalls zur Vanadiumverbindung größer als 1 ist, das Molverhältnis der Verbindung, die zur in situ-Bildung eines Magnesiumhalogenids geeignet ist, zur Titanverbindung und gegebenenfalls zur Vanadiumverbindung zwischen 1 und 15 liegt, das Molverhältnis der Vanadiumverbindung zur Titanverbindung kleiner als oder gleich 6 ist, und das Molverhältnis der halogenierten Organoaluminiumverbindung zur Verbindung, die zur in situ-Bildung eines Magnesiumhalogenids geeignet ist, zwischen 0,3 und 2 liegt.

6. Katalysator für die Polymerisation von Olefinen, umfassend mindestens eine Titanverbindung, mindestens eine halogenierte Organoaluminiumverbindung und mindestens eine anorganische Magnesiumverbindung in Suspension in mindestens einem $\alpha,\omega$-Dihalogenalkan, dadurch gekennzeichnet, daß die Titanverbindung im wesentlichen eine Titan(III)-Verbindung ist, wobei der Gesamtgehalt an Titan(II) und an Titan(IV) kleiner als oder gleich 15% des Gesamtgehaltes an Titan ist, und daß er mittels des Verfahrens eines der Ansprüche 1 bis 5 erhalten werden kann.

7. Katalysator gemäß Anspruch 6, dadurch gekennzeichnet, daß er überdies mindestens eine Vanadiumverbindung enthält, wobei das Atomverhältnis V/Ti kleiner als oder gleich 6 ist.

8. Katalysator gemäß einem der Ansprüche 6 und 7, dadurch gekennzeichnet, daß er überdies mindestens einen organometallischen Aktivator der Gruppen I bis III des Periodensystems enthält.

9. Verfahren zur Polymerisation von Olefinen bei einer Temperatur im Bereich von 20 bis 350°C, dadurch gekennzeichnet, daß die Polymerisation in der Gegenwart eines einem der Ansprüche 6 bis 8 entsprechenden Katalysators entweder bei einer Temperatur im Bereich zwischen 20 und 250°C unter einem Druck bis zu 200 bar, in Lösung oder in Suspension in einem flüssigen inerten Kohlenwasserstoff mit mindestens 6 Kohlenstoffatomen oder bei einer Temperatur zwischen 160 und 350°C unter einem Druck von 400 bis 3000 bar, kontinuierlich in einem Reaktor stattfindet, in dem die mittlere Verweildauer des Katalysators zwischen 1 und 150 Sekunden liegt.

10. Verfahren gemäß Anspruch 9, dadurch gekennzeichnet, daß es darin besteht, Ethylen mit mindestens einem $\alpha$-Olefin mit 3 bis 8 Kohlenstoffatomen in einem solchen Verhältnis zu copolymerisieren, daß ein 10 bis 75 Gewichtsprozent Propylen und 90 bis 25 Gewichtsprozent Ethylen enthaltender Gasstrom zu einem Copolymer mit einer zwischen 0,95 und 0,88 liegenden Dichte führt, ein von 95 bis 40 Gewichtsprozent Ethylen und 5 bis 60 Gewichtsprozent Buten-1 enthaltender Gasstrom zu einem Copolymer mit einer Dichte von zwischen 0,95 und 0,915 führt, ein von 30 bis 70 Gewichtsprozent Ethylen und 70 bis 30 Gewichtsprozent Hexen-1 enthaltender Gasstrom zu einem Copolymer mit einer zwischen 0,89 und 0,93 liegenden Dichte führt, ein von 25 bis 45 Gewichtsprozent Ethylen und 75 bis 55 Gewichtsprozent einer Mischung von Propylen und Buten-1 enthaltender Gasstrom zu einem Terpolymer mit einer zwischen 0,88 und 0,915 liegenden Dichte führt.

## Claims

1. Process for the preparation of a catalyst for the polymerization of olefines, comprising, in a first step, the reduction of a titanium (IV) compound in an $\alpha,\omega$-dihaloalkane by means of a molar excess of at least one halogen-containing organoaluminium compound, in the absence of an ether, characterized in that it comprises, in a second step, the addition to the reaction mixture of a compound capable of forming a magnesium halide in situ without supplementary reduction of the titanium compound obtained during the first step.

2. Process according to Claim 1, characterized in that the compound capable of forming a magnesium halide in situ is chosen from the organomagnesium derivatives of formula R-Mg-R′, in which R and R′, which may be identical or different, are alkyl radicals having 1 to 12 carbon atoms.

3. Process according to one of Claims 1 and 2, characterized in that it comprises the addition to the reaction mixture, before, during or after reduction of the titanium (IV) compound, of at least one vanadium compound chosen from the compounds of formula $VX_3$, $VX_4$ and $VO(OR)_mX_{3-m}$, in which formulae X is a halogen, R is an alkyl radical having 1 to 6 carbon atoms and $0 \leqq m \leqq 3$.

4. Process according to Claim 3, characterized in that the vanadium compound is the oxytrichloride $VOCl_3$ and in that it is added to the reaction mixture simultaneously with the titanium (IV) compound, before introduction of the halogen-containing organoaluminium compound.

5. Process according to one of Claims 1 to 4, characterized in that molar ratio of the $\alpha,\omega$-dihaloalkane to the titanium compound, and if necessary vanadium compound, is between 5 and 180, the molar ratio of the halogen-containing organoaluminium compound to the titanium compound, and if necessary the vanadium compound, is greater than 1, the molar ratio of the compound capable of forming a magnesium halide in situ to the titanium compound, and if necessary the vanadium compound, is between 1 and 15, the molar ratio of the vanadium compound to the titanium compound is less than or equal to 6 and the molar ratio of the halogen-containing organoaluminium compound to the compound capable of forming a magnesium halide in situ is between 0.3 and 2.

6. Catalyst for the polymerization of olefines, comprising at least one titanium compound, at least one halogen-containing organoaluminium compound and at least one inorganic magnesium compound in suspension in at least one $\alpha,\omega$-dihaloalkane, characterized in that the titanium compound is essentially a titanium (III) compound, the total content of titanium (II) and titanium (IV) being less than or equal to 15% of the total content of titanium, and in that it is capable of being obtained by the process of one of Claims 1 to 5.

7. Catalyst according to Claim 6, characterized in that it also comprises at least one vanadium compound, the V/Ti atomic ratio being less than or equal to 6.

8. Catalyst according to one of Claims 6 and 7, characterized in that, moreover, it comprises at least one organometallic activator from groups I to III of the periodic classification.

9. Process for the polymerization of olefines at a temperature of between 20° and 350°C, characterized in that the polymerization is carried out in the presence of a catalyst according to one of Claims 6 to 8, either at a temperature of between 20 and 250°C, under a pressure of up to 200 bar, in solution or in suspension in an inert liquid hydrocarbon having at least 6 carbon atoms, or at a temperature of between 160 and 350°C, under a pressure of between 400 and 3000 bar, in a continuous manner in a reactor in which the mean residence time of the catalyst is between 1 and 150 seconds.

10. Process according to Claim 9, characterized in that it consists in copolymerizing ethylene with at least one $\alpha$-olefine containing 3 to 8 carbon atoms, in proportions such that a gaseous flow containing 10% to 75% by weight of propylene and 90% to 25% by weight of ethylene leads to a copolymer having a density of, respectively, between 0.95 and 0.88, a gaseous flow containing 95% to 40% by weight of ethylene and 5 to 60% by weight of but-1-ene leads to a copolymer having a density of, respectively, between 0.95 and 0.915, a gaseous flow containing 30% to 70% by weight of ethylene and 70% to 30% by weight of hex-1-ene leads to a copolymer having a density of, respectively, between 0.89 and 0.93, and a gaseous flow containing 25 to 45% by weight of ethylene and 75% to 55% by weight of a mixture of propylene and but-1-ene leads to a terpolymer having a density of, respectively, between 0.88 and 0.915.